# EUROPEAN PATENT APPLICATION

(11) **EP 2 490 012 A1**
(43) Date of publication of application: **22.08.2012**
(21) Application number: 12155070.1
(22) Date of filing: 13.02.2012
(51) Int. Cl.: G01N 27/12, G01N 27/22, G01N 27/414

(54) **Sensor and method for sensing of at least one analyte comprising using such sensor**

(30) Priority: 16.02.2011 US 201161443355 P
(71) Applicant: Stichting IMEC Nederland, 5656 AE Eindhoven (NL)
(72) Inventor: Karakaya, Koray, 5615 CL Eindhoven (NL)
(74) Representative: Duyver, Jurgen Martha Herman

(57) **Abstract**

A sensor comprising at least one resistive switching sensing element comprising a resistive switching layer (15, 25, 35) that can be switched from a high resistance state to a low resistance state by creating a first electric field over the resistive switching layer (15, 25, 35) and that can be switched from the low resistance state to the high resistance state by creating a second electric field over the resistive switching layer (15, 25, 35).

## Description

### Field of the disclosure

The current disclosure relates to a sensor, preferably chemical and biochemical sensors, according to the preamble of the first claim.

The present disclosure also relates to a method for sensing of at least one analyte comprising using such a sensor.

### Description of the related technology

Chemical and/or biochemical sensing devices are typically based on absorption or adsorption of an analyte on the surface of a sensitive structure, followed by diffusion of the analyte and/or analyte induced species within the sensitive structure. The process of responding to an analyte can be described by a combination of physical, chemical and/or physiochemical reactions that change at least one property of the sensitive structure, the change being transduced into (electrical) signals.

Sensors based on capacitive, resistive or field effect transduction typically use a dielectric medium as the sensitive material. The change of for example the resistance, capacitance and/or the carrier concentration is monitored and associated to the analyte presence (qualitative) and/or concentration (quantitative). These sensors require at least two electrical measurement points (e.g. electrodes in contact with the dielectric medium) for measuring the analyte induced change of the parameters.

One of the major problems caused by the nature of the interaction process of such sensors is making the interaction reversible, i.e. removing analytes and/or analyte induced species from the transducer, also known as 'refreshing'. A common practice for refreshing is thermal treatment (i.e. heating) of the transducer for promoting outdiffusion and/or desorption of the analytes and/or analyte induced species. However, such a thermal treatment of the sensor may result in a significant amount of power consumption. Another refreshing approach is holding the sensor device in a 'neutral' ambient and allowing analytes to diffuse out and/or to desorb. This usually increases the refreshing time, unless compensated with thermal assistance to the cost of high power consumption.

Most of the dielectric materials used in capacitive, resistive and field effect sensing devices are prone to interact with more than one analyte, for example humidity and the analyte of interest. This causes cross sensitivity and/or a weaker response to the analyte of interest. A possible approach for solving the cross sensitivity problem is to use an array of sensors. However, this increases device complexity. Another common approach is using membranes or other layers for filtering out the unwanted components or preconditioning the analyte before exposing to the sensor device, in expense of increasing the response time.

Therefore, it is an object of the current disclosure to provide a sensor for detecting the presence and the concentration of at least one analyte, wherein the sensor can operate at ambient temperature and can be refreshed at ambient temperature, and wherein cross sensitivity is reduced as compared to prior art sensors.

### Summary of certain inventive aspects

The object is achieved according to a sensor according to the first claim.

Thereto, the sensor comprises at least one resistive switching element, the at least one resistive switching element comprising a resistive switching layer, such as for example a dielectric layer and/or an ionic conductive layer, that can be switched from a high resistance state to a low resistance state by creating a first electric field over the resistive switching layer, for example the dielectric layer and/or the ionic conductive layer, and that can be switched from the low resistance state to the high resistance state by creating a second electric field over the resistive switching layer, for example the dielectric layer and/or the ionic conductive layer. Creating a first electric field over the resistive switching layer, for example the dielectric layer and/or ionic conductive layer, can comprise applying a first voltage difference between a first electrode and a second electrode and thereto comprises means for applying the first voltage difference between a first electrode and a second electrode. Creating a second electric field over the resistive switching layer, for example the dielectric layer and/or ionic conductive layer, can comprise applying a second voltage difference between the first electrode and the second electrode and thereto comprises means for applying the second voltage difference between the first electrode and the second electrode. The sensor according to a preferred embodiments further comprises electrical circuitry for continuously switching the resistive switching layer, for example the dielectric layer and/or the ionic conductive layer, between the high resistance state and the low resistance state during operation According to preferred embodiments the sensor further comprises measurement circuitry for measuring at least one predetermined parameter of the at least one sensing element.

According to preferred embodiments of the current disclosure, the sensor is provided for sensing a predetermined analyte wherein the low resistance state is created by the first electric field by the formation of conductive filaments within the resistive switching layer, in that the high resistance state is created by the second electric field by the annihilation of the conductive filaments within the resistive switching layer and in that the formation and/or annihilation of the conductive filaments within the resistive switching layer is affected by interaction with the predetermined analyte.

According to preferred embodiments, the sensing element has an electrode - resistive switching layer, preferably dielectric layer and/or ionic conductive layer, - electrode configuration. For example, it can comprise a stack (metal - insulator - metal structure or MIM structure) of a metal layer (first electrode), a resistive switching layer, for example a dielectric layer or an ionic conductive layer or a stack comprising a dielectric layer and an ionic conductive layer, and a metal layer (second electrode). Alternatively, it can have a planar structure with interdigitated electrodes, wherein the interdigitated electrodes can be located at a surface of the resistive switching layer, for example the dielectric layer or the ionic conductive layer, or wherein the interdigitated electrodes can be buried in the resistive switching layer, for example the dielectric layer or the ionic conductive layer. Other device structures or configurations are possible, such as for example a FET (Field effect transistor) structure, such as for example a MOSFET structure or even a MI-MOSFET structure.

The resistive switching layer, for example the dielectric layer and/or ionic conductive layer, can for example comprise a metal oxide or a polymer or any other suitable dielectric material known to a person skilled in the art. For example, it can comprise vacuum or an air gap, GeSe, As₂Se₃, Cu₂S, a polymer electrolyte (such as e.g. calixarene), an oxide such as Ta₂O₅, WO₃, SiO₂, TiO₂, NiO.

According to preferred embodiments of the current disclosure, the sensor further comprises measurement circuitry for measuring at least one predetermined parameter of the at least one sensing element. Preferably, the predetermined parameter is related to the formation and annihilation of the filaments within the resistive switching layer, influenced by the presence of the predetermined analyte.

The at least one predetermined parameter can for example be the resistance of the resistive switching layer, for example the dielectric layer and/or the ionic conductive layer, at the high resistance state, the resistance of the resistive switching layer, for example the dielectric layer and/or the ionic conductive layer, at the low resistance state, the first voltage difference (setting voltage), the second voltage difference (resetting voltage), the charge pumped into the sensing element for switching from the low resistance state to the high resistance state or from the high resistance state to the low resistance state, the switching time between the high resistance state and the low resistance state, the dielectric constant of the dielectric layer material if present, or any combination of these parameters.

According to preferred embodiments of the sensing element of a sensor according to the present disclosure, the response characteristics can be improved by increasing the surface to volume ratio and/or by increasing the analyte interaction surface of the sensing element. Therefore, in advantageous embodiments grid-like electrodes or porous electrodes can be used, or the electrodes can be buried for fully exposing the resistive switching layer, for example the dielectric layer or the ionic conductive layer, to the analyte.

The sensitivity can be further influenced by using catalytic electrodes that enhance the interaction between an analyte and the sensor. For example, Pt electrodes have catalytic properties for CO (leading to the formation of CO₂), which may allow using a CO₂ sensitive material such as for example La₂O₃ for CO sensing.

A method for sensing of at least one analyte according to the present disclosure using the sensor according to the present disclosure comprises, preferably: providing the at least one sensing element comprising the resistive switching layer, for example the dielectric layer and/or an ionic conductive layer, that can be switched from the high resistance state to the low resistance state by creating the first electric field over the resistive switching layer, for example the dielectric layer and/or the ionic conductive layer, and that can be switched from the low resistance state to the high resistance state by creating the second electric field over the resistive switching layer, for example the dielectric layer and/or the ionic conductive layer; preferably, during a predetermined measurement time, repeatedly switching the resistance of the sensing element between the high resistance state and the low resistance state at a predetermined switching rate; preferably measuring at least one predetermined parameter of the at least one sensing element at a predetermined sampling rate; and preferably determining the presence and/or concentration of the at least one analyte from the evolution of the at least one predetermined parameter. Creating a first electric field over the resistive switching layer, for example the dielectric layer and/or ionic conductive layer, can comprise applying a first voltage difference between a first electrode and a second electrode. Creating a second electric field over the resistive switching layer, for example the dielectric layer and/or ionic conductive layer, can comprise applying a second voltage difference between the first electrode and the second electrode.

The predetermined switching rate can for example correspond to a switching time in the range between about 10 nanoseconds and several hundreds of milliseconds. Within this range, the shorter switching times are preferably used in case of thermal based resistive switching elements, being resistive switching elements comprising a dielectric layer as resistive switching layer, and the longer switching times are preferably used in case of ionic conductance based resistive switching elements, being resistive switching elements comprising an ionic conductive layer as resistive switching layer.

The predetermined sampling rate can for example correspond to a sampling time (i.e. the time between two subsequent measurements) between about 10 ns and 1 minute, between about 10 ns and 10 seconds, or between about 10 ns and 100 ms.

For resistive switching operation of a sensor according to one inventive aspect, the sampling rate is at least as large as the switching rate, preferably larger than the switching rate.

The predetermined measurement time is preferably selected such that it at least covers the response time of the at least one sensing element to the at least one analyte. For example, the measurement time can be in the order of about 1 second to several minutes, for example between about 1 second and 10 minutes, for example between about 1 second and 100 seconds.

The at least one predetermined parameter can for example be the resistance of the resistive switching layer, for example the dielectric layer and/or the ionic conductive layer, at the high resistance state, the resistance of the resistive switching layer, for example the dielectric layer and/or the ionic conductive layer, at the low resistance state, the first voltage (setting voltage), the second voltage (resetting voltage), the charge pumped into the sensing element for switching from the low resistance state to the high resistance state, the charge pumped into the sensing element for switching from the high resistance state to the low resistance state, the switching time between the high resistance state and the low resistance state, the dielectric constant of the dielectric layer material if present, or any combination of these parameters.

It is an advantage of a sensor and a sensing method according to the current discolsure that the power consumption can be low. For example, during operation the voltages can be lower than 1 V and the currents can be in the nano-Ampere to micro-Ampere range. Therefore, power consumption can be in the micro-Watt range.

It is an advantage of a sensor and a sensing method according to current disclosure that no external heating is needed during sensing or for refreshing, in other words ambient temperature operation is possible.

It is an advantage of a sensor according to the current disclosure that refreshing of the sensor can be done without the need for heating, thus allowing refreshing with low power consumption. It is an advantage of a sensor according to the current disclosure that refreshing can be done without the need for holding the sensor in a neutral ambient for removing analytes or analyte induced species, thus allowing short refreshing times.

It is an advantage of a sensor according to the current disclosure that it can have a reduced cross sensitivity as compared to prior art sensors, such that the need for providing a sensor array and/or the need for analyte filtering or preconditioning can be avoided. This results in a reduced device complexity and a faster response time as compared to prior art devices.

It is an advantage of a sensor according to the current disclosure that it is scalable to small device dimensions and that it is compatible with CMOS technology.

Certain objects and advantages of various inventive aspects have been described herein above. Of course, it is to be understood that not necessarily all such objects or advantages may be achieved in accordance with any particular embodiment of the disclosure. Thus, for example. those skilled in the art will recognize that the disclosure may be embodied or carried out in a manner that achieves or optimizes one advantage or group of advantages as taught herein without necessarily achieving other objects or advantages as may be taught or suggested herein. Further, it is understood that this summary is merely an example and is not intended to limit the scope of the disclosure. The disclosure, both as to organization and method of operation, together with features and advantages thereof, may best be understood by reference to the following detailed description when read in conjunction with the accompanying drawings.

### Brief description of the drawings

Figure 1 schematically illustrates a sensing element according to one embodiment, wherein the sensing element has a MI-MOSFET structure.
Figure 2 schematically shows a cross section of a sensing element according to one embodiment, wherein the sensing element has a MIM structure.
Figure 3 schematically shows a top view of a sensing element according to one embodiment, wherein the sensing element has an interdigitated MIM structure.

In the different drawings, the same reference signs refer to the same or analogous elements.

### Detailed description of certain illustrative embodiments

In the following detailed description, numerous specific details are set forth in order to provide a thorough understanding of the disclosure and how it may be practiced in particular embodiments. However, it will be understood that the present disclosure may be practiced without these specific details. In other instances, well-known methods, procedures and techniques have not been described in detail, so as not to obscure the present disclosure. While the present disclosure will be described with respect to particular embodiments and with reference to certain drawings, the disclosure is not limited hereto. The drawings included and described herein are schematic and are not limiting the scope of the disclosure. It is also noted that in the drawings, the size of some elements may be exaggerated and, therefore, not drawn to scale for illustrative purposes.

Furthermore, the terms first, second, third and the like in the description, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Moreover, the terms top, bottom, over, under and the like in the description are used for descriptive purposes and not necessarily for describing relative positions. It is to be understood that the terms so used are interchangeable under appropriate circumstances and that the embodiments of the disclosure described herein are capable of operation in other orientations than described or illustrated herein.

It is to be noticed that the term "comprising" should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

Certain embodiments relate to a sensor and a method for sensing based on a resistive switching sensing element.

Resistive switching devices are based on the formation and rupture of conductive filaments within a resistive switching layer, for example a dielectric and/or ionic conductive medium. Such devices have for example been used in resistive memory (resistive random access memory - RRAM) applications. Resistive switching devices exhibit a low resistance state (LRS) after formation of filaments and a high resistance state (HRS) after annihilation of filaments. Depending on the electric field polarity of formation and rupture of conductive filaments these devices are named as bipolar or unipolar resistive switches.

A sensor according to one embodiment of the present disclosure comprises at least one sensing element, a resistive switching sensing element being a resistive switching device, the at least one sensing element comprising a resistive switching layer, for example a dielectric layer and/or an ionic conductive layer, that can be switched from a high resistance state to a low resistance state by creating a first electric field over the resistive switching layer, for example dielectric layer and/or the ionic conductive layer, and that can be switched from the low resistance state to the high resistance state by creating a second electric field over the resistive switching layer, for example the dielectric layer and/or the ionic conductive layer. Creating a first electric field over the resistive switching layer, for example the dielectric layer and/or ionic conductive layer, can comprise applying a first voltage between a first electrode and a second electrode. Creating a second electric field over the resistive switching layer, for example the dielectric layer and/or ionic conductive layer, can comprise applying a second voltage between the first electrode and the second electrode. The sensor according to preferred embodiments further comprises electrical circuitry for continuously switching the dielectric layer and/or the ionic conductive layer between the high resistance state and the low resistance state during operation, and/or according to preferred embodiments further comprises measurement circuitry for measuring at least one predetermined parameter of the at least one sensing element.

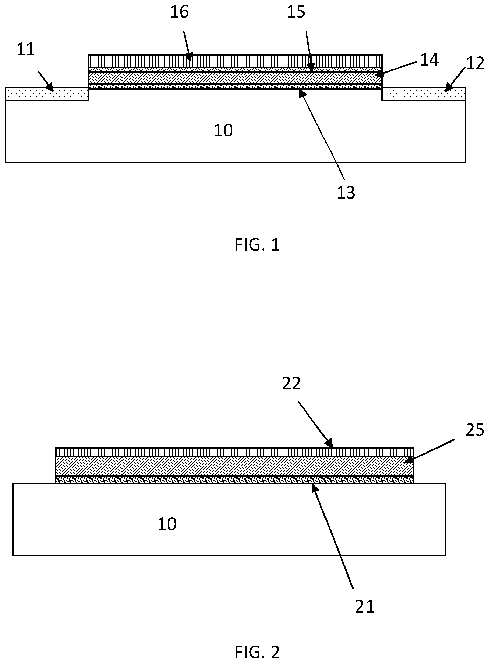

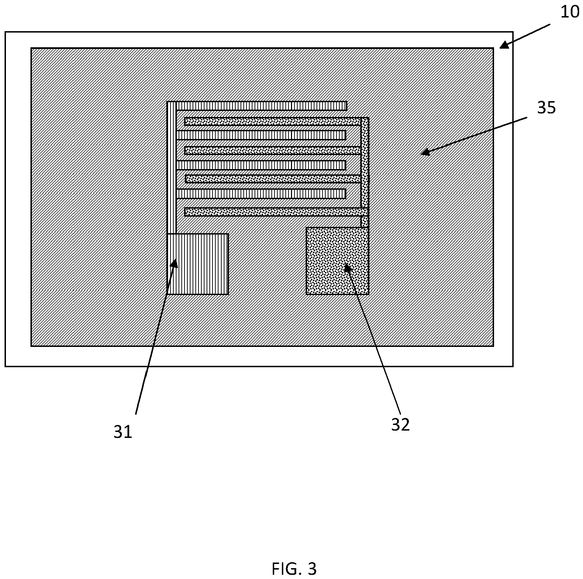

A sensing element of a sensor according to one embodiment of the present disclosure can have an electrode - resistive switching layer, for example dielectric layer and/or ionic conductive layer, - electrode configuration. It can for example have a parallel plate capacitor structure (illustrated in Figure 2), or it can comprise interdigitated electrodes (illustrated in Figure 3) and variations of those such as a crossbar configuration, grid-like top electrodes or porous electrodes for enhanced analyte interaction, etc.

Figure 2 shows a cross section of a sensing element according to one embodiment of the present disclosure wherein the sensing element has a MIM capacitor structure. In the example shown, the MIM capacitor structure is provided on a substrate 10. It comprises a first electrode 21, a second electrode 22 and a resistive switching layer 25 sandwiched between the first electrode 21 and the second electrode 22. The resistive switching layer 25 can comprise a dielectric layer and/or an ionic conductive layer. It can comprise a stack of different dielectric and/or ionic conductive layers.

Figure 3 shows a top view of a sensing element according to one embodiment of the present disclosure wherein the sensing element has an interdigitated MIM structure. In the example shown, the MIM capacitor structure is provided on a substrate 10. It comprises a resistive switching layer 35, a first comb-shaped electrode 31 and a second comb-shaped electrode 32 on the resistive switching layer 35, the first comb-shaped electrode 31 and the second comb-shaped electrode 32 being interdigitated. The resistive switching layer 35 can comprise a dielectric layer and/or an ionic conductive layer. It can comprise a stack of different dielectric and/or ionic conductive layers.

A sensing element of a sensor according to one embodiment of the present disclosure can have a transistor structure such as for example a MOSFET structure, where the MOS part comprises, or preferably consists of, a resistive switching capacitor stack. In a MOSFET device, the gate metal - gate dielectric - channel semiconductor stack is a parallel plate capacitor, in which the gate dielectric and the gate metal can be selected for providing resistive switching of the gate dielectric.

A sensing element of a sensor according to one embodiment of the present disclosure can for example have a MI-MOSFET structure in which the gate is a part of another metal - resistive switching material, preferably dielectric and/or ionic conductor - metal resistive switching stack. This is schematically illustrated in Figure 1. The MI-MOSFET structure comprises a source 11 and a drain 12 formed in a semiconductor substrate 10, a gate dielectric 13 and a gate metal layer 14. On top of the gate metal layer 14 a resistive switching layer 15 comprising a dielectric layer and/or ionic conductive layer is provided. An additional metal layer 16 is provided on the resistive switching layer 15, resulting in MIM structure directly integrated on a MOSFET (MI-MOSFET structure). At a high resistance state of the resistive switching structure, the voltage over the resistive switching layer 15 is high, resulting in a low gate voltage, e.g. lower than the threshold voltage. The MOSFET transistor is then in an OFF-state and no current is flowing between the source 11 and the drain 12. At a low resistance state of the resistive switching structure the voltage drop over the resistive switching layer 15 is lower, resulting in a gate voltage higher than the threshold voltage. The MOSFET transistor is then in an ON-state and a current is flowing between the source 11 and the drain 12. The gate voltage of the MOSFET is a function of the resistance of the resistive switching layer 15. A higher resistance leads to a larger voltage drop and thus a lower gate voltage. As the gate voltage changes as a function of the resistance change, the source-drain current also changes. This change in source-drain current can be used for sensing. In addition to that, by biasing the gate around a threshold voltage one can make a MOSFET switch based on analyte conditions. At a high resistance state the voltage drop between the metal layer 16 and the gate metal layer 14 is high, hence the gate voltage is too low to switch ON the MOSFET (gate voltage lower than threshold voltage). As the resistance of the resistive switching layer 15 decreases, the gate voltage becomes larger than the threshold voltage and the MOSFET can switch to the ON state.

Material selection of a resistive switching sensor according to one embodiment of the present disclosure may in many cases need to be tailor made for a selected application.

Selecting a suitable set of materials first of all depends on the type of resistive switching. For example, unipolar resistive switching, bipolar resistive switching and ionic resistive switching require different material combinations. For example, the dielectric material can comprise a metal oxide such as TiO₂, SnO₂, ZnO, VO₂, La₂O₃ or WO₃. Apart from metal oxides, various polymeric materials, polymer matrix composites, as well as a number of other ionic conductors can be used for resistive switching sensors according to one embodiment, in particular for those which form ionic filaments as primary resistive switching mechanism. However, the present disclosure is not limited thereto and any material having resistive switching properties can be used.

In addition to the resistive switching layer, for example the dielectric material and/or the ionic conductive material, selecting an appropriate electrode combination influences the sensing characteristics. For example, one of the electrodes may contribute to redox reactions that control resistive switching, or may form an ionic/metallic filament by diffusing into the resistive switching layer, such as for example the dielectric layer or the ionic conductive layer.

The material of the first electrode can be different from the material of the second electrode. For example, one electrode can be inert, meaning that it does not contribute to filament formation. The other electrode can be selected for contributing to filament formation. Filaments can for example be formed either by direct diffusion of metal atoms from the electrode into the dielectric layer or by creating an unstable interface with the dielectric (e.g. an interface with very high defect density, e.g. with a high amount of mobile charges). Catalytic properties of the electrode material and/or the resistive switching layer, for example the dielectric layer material, may also be considered when selecting materials.

In embodiments with a crossbar structure, individual addressing of resistive switching elements is possible, by using 'word lines' and 'bit lines' in analogy to memory applications. Individual addressing of resistive switching elements can bring additional selectivity. For example, by using different metal widths and thus creating smaller and larger resistive switching elements, differences in diffusion rates can be monitored. The analyte response time as a function of cell dimension can be used for comparing diffusion coefficients of analytes in a mixture. By using different electrode materials for different lines, the chemical affinity towards a certain analyte can be changed, thus leading to an enhanced selectivity.

Basic mechanisms for resistive switching are generally categorized in three groups: thermal effects, ionic effects and electronic effects. A resistive switching sensor according to one embodiment can for example be based on thermal effects or on ionic effects.

Formation of filaments (i.e. conduction paths in the dielectric medium) by the thermal effect is based on dielectric breakdown of a dielectric medium, for example by applying a voltage. Formation of filaments results in a low resistance state of the device. A current passing through the filament causes Joule heating and eventually reduces a metal oxide to a metallic state. Joule heating due to the current passing through a conductive filament does not involve an external heating mechanism. The device then reaches a low resistance state after formation of metallic (or metallic-like) filaments. The device keeps its low resistance state at normal operation. Upon applying a voltage above the "off voltage", the current that passes through the low resistance filament increases the temperature around the filament, also by Joule heating, and causes re-oxidation of the metallic filament. This results in switching of the device into a high resistance state. Resistive switching devices based on a thermal effect are intrinsically reversible, which means that thermal refreshment of the sensor device is an intrinsic part of the device operation, and the need for an additional effort for sensor refreshment is avoided. When a current passes through the conductive filament the temperature increases locally as a result of Joule heating. Each cycle between low and high resistance states can actually result in refreshing of the sensor.

Formation of filaments by the ionic effect comprises diffusion of ions from one electrode to another electrode. By applying a reverse potential the filaments break down and the device resets. Resistive switching devices based on ionic effects are also intrinsically reversible, and reversibility is achieved by applying a bipolar electric field in a regular device operation cycle. Therefore there is no need for external refreshment when using these types of devices in sensor applications. Unlike the thermal effect based devices, electromigration of ions is the dominant mechanism for ionic effect based devices. Ions migrate from the first electrode to the second electrode during operation, and refreshing can be obtained by applying a reverse electric field.

Besides resistive switching based on the thermal effect or on the ionic effect, other known resistive switching mechanisms can be used in a sensing device according to one embodiment.

A method for sensing of at least one analyte according to one embodiment of the present disclosure using the sensor according to the present disclosure comprises, preferably: providing the at least one sensing element comprising the resistive switching layer, preferably the dielectric layer and/or the ionic conductive layer, that can be switched from the high resistance state to the low resistance state by creating the first electric field over the resistive switching layer, preferably the dielectric layer and/or the ionic conductive layer, and that can be switched from the low resistance state to the high resistance state by creating the second electric field over the resistive switching layer, preferably the dielectric layer and/or the ionic conductive layer; preferably during a predetermined measurement time, repeatedly switching the resistance of the sensing element between the high resistance state and the low resistance state at a predetermined switching rate; preferably measuring at least one predetermined parameter of the at least one sensing element at a predetermined sampling rate; and preferably determining the presence and/or concentration of the at least one analyte from evolution of the at least one predetermined parameter. Creating a first electric field over the resistive switching layer, preferably the dielectric layer and/or the ionic conductive layer, can comprise applying a first voltage difference between a first electrode and a second electrode. Creating a second electric field over the resistive switching layer, preferably the dielectric layer and/or ionic conductive layer, can comprise applying a second voltage difference between the first electrode and the second electrode.

When using a resistive switching sensor according to one embodiment for sensing, at least one predetermined parameter is monitored during a predetermined measurement time, wherein the device is continuously switched between a high resistance state and a low resistance state. The at least one predetermined parameter is related to the setting and resetting behaviour of the device, which can be influenced by the presence of an analyte. The at least one predetermined parameter can for example be the resistance of the dielectric layer and/or the ionic conductive layer at the high resistance state, the resistance of the resistive switching layer, the dielectric layer and/or the ionic conductive layer, at the low resistance state, the first voltage (setting voltage), the second voltage (resetting voltage), the charge pumped into the sensing element for switching between the high resistance state and the low resistance state, the switching time between the high resistance state and the low resistance state, the dielectric constant of the dielectric layer material if present, or any combination of these parameters. A relation can be established experimentally between these parameters and the presence and/or the concentration of an analyte.

A sensor according to one embodiment of the present disclosure can have a reduced cross sensitivity as compared to prior art sensors, such that the need for providing a sensor array and/or the need for analyte filtering or preconditioning can be avoided. A reduced cross sensitivity can be obtained by selecting a suitable set of materials for the resistive switching layer, for example the dielectric layer or the ionic conductive layer, and the electrodes, by selecting an appropriate sampling rate allowing monitoring differences in diffusion rate for various analytes, and/or by using multiple parameters (e.g. resistance values at high and low resistance states, setting and resetting voltages, switching times, ...) and processing these parameters for example with a Principal Component Analysis for resolving cross sensitivity.

Resistive switching sensing elements in MIM configuration also provide various solutions to the cross sensitivity/selectivity problem. For example, the very fast nature of resistive switching in scale of nano- to microseconds can be used for monitoring the diffusion rates of various analytes. Therefore, it allows resolving differences between analytes with high and low diffusion rates.

The most appropriate resistive switching mechanism may be different for different types of analytes.

For example, resistive switching sensing elements based on ionic filament formation can advantageously be used for detecting analytes that form ions (such as for example H, O, CO, NO) within the resistive switching layer, for example the dielectric layer or the ionic conductive layer. A relation can be established experimentally between the analyte concentration at one hand and the resistance of the material and/or the switching voltages at the other hand. Additional selectivity can be obtained by monitoring the time for switching (slow versus fast diffusion).

For example, for resistive switching sensing elements based on the thermal effect there is no need for ion formation. Therefore also analytes not contributing to ionic filament formation can be detected by such sensing elements. Joule heating plays a role in filament formation and annihilation. The working principle is based on defect migration in the dielectric layer or in the ionic conductive layer. Variations of defect density may influence switching time, switching voltage and/or other parameters. For example, hydrogen or oxygen atoms can neutralize or stimulate defects within the dielectric layer and alter the switching characteristics.

A resistive switching sensing element according to one embodiment according to the present disclosure can for example also operate as a resistive gas sensor. For example, changes in the resistance at the low resistance state and/or changes in the resistance at the high resistance state can be monitored. The response of a sensor in one embodiment can be different at the high resistance state and at the low resistance state for a given analyte, due to the different conduction mechanisms involved in the different resistance states. This effect can be used for fingerprinting an analyte, i.e. for identifying individual components in a mixed analyte.

In a sensor according to one embodiment according to the present disclosure, the switching voltages between the high resistance and low resistance states, i.e. the setting voltage and the resetting voltage, can be used as a parameter for determining the concentration of a predetermined analyte. For example, an analyte that fills oxygen vacancies (such as e.g. cations or H) or analytes that generate oxygen vacancies (such as e.g. CO, NO) within an oxide dielectric may influence the switching voltages.

The compliance current, i.e. the current needed for switching between a low resistance state and a high resistance state, and thus the charge pumped into the device for switching between these states, is a function of the amount of material to be transformed for forming and breaking conductive filaments. Therefore the compliance current (and the charge pumped into the device) can be influenced by the presence of an analyte and can be used as a measurement parameter when using a sensor according to one embodiment.

In addition to the resistive switching mechanisms described above, this kind of devices can also be used as conventional capacitive devices (for example in MIM configuration) at the high resistance state. For example, an impedance analysis over a frequency range can provide information about the different mobile charges present in the system. By monitoring the capacitance of these devices at various frequencies (e.g. by frequency sweeping from about 1 kHz to 100 kHz) one can resolve the differences between various mobile ions present in the dielectric. This brings additional functionality that can be used for enhancing selectivity. For example, monitoring the dielectric constant of the dielectric material can be used as an additional parameter for sensing. It can also be used for monitoring the long term stability of a sensing element.

Refreshing of a sensing element based on the thermal effect according to one embodiment can for example comprise keeping the sensing element in a low resistance state at a predetermined current level. The current transported through the confined volume of conductive filaments locally heats up its surroundings by Joule heating.

As opposed to known resistive switching devices, such as resistive switching based memory elements that are totally encapsulated to prevent interaction with the environment to avoid deterioration of the memory elements, resistive switching sensing elements are exposed to the ambient. Therefore, the device design is different and other material selection criteria are used. For example, memory devices are encapsulated whereas sensors in one embodiment according to the present disclosure are exposed to the environment and may have top electrodes designed for high analyte permeability.

The foregoing description details certain embodiments of the disclosure. It will be appreciated, however, that no matter how detailed the foregoing appears in text, the disclosure may be practiced in many ways. It should be noted that the use of particular terminology when describing certain features or aspects of the disclosure should not be taken to imply that the terminology is being re-defined herein to be restricted to including any specific characteristics of the features or aspects of the disclosure with which that terminology is associated.
While the above detailed description has shown, described, and pointed out novel features of the disclosure as applied to various embodiments, it will be understood that various omissions, substitutions, and changes in the form and details of the device or process illustrated may be made by those skilled in the technology without departing from the spirit of the disclosure.

## Claims

1. A sensor comprising at least one resistive switching sensing element comprising a resistive switching layer (15, 25, 35) that can be switched from a high resistance state to a low resistance state by creating a first electric field over the resistive switching layer (15, 25, 35) and that can be switched from the low resistance state to the high resistance state by creating a second electric field over the resistive switching layer (15, 25, 35).

2. A sensor for sensing a predetermined analyte according to claim 1, **characterized in that** the low resistance state is created by the first electric field by the formation of conductive filaments within the resistive switching layer (15, 25, 35), **in that** the high resistance state is created by the second electric field by the annihilation of the conductive filaments within the resistive switching layer (15, 25, 35) and **in that** the formation and/or annihilation of the conductive filaments within the resistive switching layer (15, 25, 35) is affected by interaction with the predetermined analyte.

3. A sensor as claimed in claim 1 or 2, wherein for creating the first and/or second electric field over the resistive switching layer (15, 25, 35), the sensor respectively comprises means for applying a respective first and/or second voltage difference between a respective first electrode and second electrode (21, 22, 31, 32).

4. A sensor as claimed in any one of claims 1 - 3, wherein the sensor comprises electrical circuitry for continuously switching the resistive switching layer (15, 25, 35) between the high resistance state and the low resistance state during operation.

5. A sensor as claimed in any one of claims 1 - 4, wherein the sensor further comprises measurement circuitry for measuring at least one predetermined parameter of the at least one sensing element.

6. A sensor for sensing a predetermined analyte as claimed in claim 5 at least in combination with claim 2, **characterized in that** the predetermined parameter is related to the formation and annihilation of the filaments within the resistive switching layer (15, 25, 35), influenced by the presence of the predetermined analyte.

7. A sensor as claimed in claim 6, wherein the at least one predetermined parameter is the resistance of the resistive switching layer (15, 25, 35), preferably the dielectric layer and/or the ionic conductive layer, at the high resistance state, the resistance of the resistive switching layer (15, 25, 35), preferably the dielectric layer and/or the ionic conductive layer, at the low resistance state, the first voltage difference (setting voltage), the second voltage difference (resetting voltage), the charge pumped into the sensing element for switching from the low resistance state to the high resistance state or from the high resistance state to the low resistance state, the switching time between the high resistance state and the low resistance state, the dielectric constant of the dielectric layer material, or any combination of these parameters.

8. A sensor according to any one of claims 1 - 7, wherein the sensing element has a MIM structure.

9. A sensor according to any one of claims 1 - 8, wherein the sensing element has a FET structure, preferably a MOSFET structure.

10. A sensor according to claim 8 and 9, wherein the sensing element has a MI-MOSFET structure.

11. A method for sensing of at least one analyte comprising using a sensor according to any one of claims 1 - 10 at least in combination with claim 5.

12. A method for sensing of at least one analyte according to claim 11, wherein, during a predetermined measurement time, the resistance of the sensing element is repeatedly switched between the high resistance state and the low resistance state at a predetermined switching rate.

13. A method for sensing of at least one analyte according to claim 11 or 12, wherein at least one predetermined parameter of the at least one sensing element is measured at a predetermined sampling rate.

14. A method for sensing of at least one analyte according to claim 13, wherein the presence and/or concentration of the at least one analyte is determined from the evolution of the at least one predetermined parameter.

15. A method for sensing of at least one analyte according to any one of claims 11 - 14, wherein the first electric field over the resistive switching layer (15, 25, 35) is created by applying a first voltage difference between a first electrode (21, 31) and a second electrode (22, 32) and/or the second electric field over the resistive switching layer (15, 25, 35) is created by applying a second voltage difference between the first electrode and the second electrode (21, 22, 31, 32).
